(19) Europäisches Patentamt
European Patent Office
Office européen des brevets

(11) EP 2 993 857 B1

(12) EUROPEAN PATENT SPECIFICATION

(45) Date of publication and mention
of the grant of the patent:
**19.12.2018 Bulletin 2018/51**

(51) Int Cl.:
*H04L 29/06* (2006.01)  *H04W 74/08* (2009.01)
*H04W 52/04* (2009.01)

(21) Application number: **14801623.1**

(22) Date of filing: **22.05.2014**

(86) International application number:
**PCT/CN2014/078094**

(87) International publication number:
**WO 2014/187333 (27.11.2014 Gazette 2014/48)**

(54) **METHOD AND DEVICE FOR DATA TRANSMISSION**

VERFAHREN UND VORRICHTUNG FÜR DATENÜBERTRAGUNG

PROCÉDÉ ET DISPOSITIF POUR TRANSMISSION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2013 CN 201310191470**

(43) Date of publication of application:
**09.03.2016 Bulletin 2016/10**

(73) Proprietor: **Huawei Device Co., Ltd.**
**Shenzhen, Guangdong 518129 (CN)**

(72) Inventors:
• **DU, Zhenguo**
**Shenzhen**
**Guangdong 518129 (CN)**
• **SHU, Guiming**
**Shenzhen**
**Guangdong 518129 (CN)**
• **LU, Su**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
**EP-A2- 1 528 691      WO-A1-2011/099687**
**CN-A- 1 684 441      CN-A- 102 625 997**
**CN-A- 102 983 918      US-A1- 2006 221 911**

## Description

### TECHNICAL FIELD

The present invention relates to the communications field, and in particular, to a data transmission method and device.

### BACKGROUND

As a term in WLAN (Wireless Local Area Network, wireless local area network), BSS (Basic Service Set, basic service set) is used to describe a group of mobile devices communicating with each other in an 802.11 WLAN. A BSS generally includes one AP (Access Point, access point) and several STAs (Station, station). The AP and the STA usually perform data transmission by using their respective normal transmit power. The normal transmit power of the AP is a fixed value, but the normal transmit power of the STA is not a fixed value and is determined by a power attenuation situation of data sent by an AP communicating with the STA to the STA. Generally, a longer distance between the AP and the STA that communicate with each other indicates greater power attenuation and larger transmit power used by the STA to communicate with the AP. A coverage area of each BSS is determined by the normal transmit power of the AP in the BSS. Because normal transmit power of APs in different BSSs is different, coverage areas of the BSSs may also be different. In specific implementation, there may be such a case that multiple short range BSSs may exist in a coverage area of one long range BSS, that is, the coverage area of the long range BSS overlaps coverage areas of the short range BSSs. In this case, if a device (AP or STA) in the long range BSS and a device (AP or STA) in the short range BSS simultaneously perform data transmission, mutual interference between transmission of the two devices occurs, causing a transmission failure. Therefore, data transmission performed by the device in the long range BSS and the device in the short range BSS needs to be controlled to prevent occurrence of a conflict.

There is a data transmission method in the prior art, and the method includes: performing, by a device in a basic service set, physical carrier sense on a channel, that is, CCA (Clear Channel Assessment, clear channel assessment), to obtain a status of the channel; detecting a data frame sent by a device in another basic service set, so as to perform virtual carrier sense on the channel, and setting, according to a Duration (duration) field in a frame header of a MAC (Medium Access Control, Medium Access Control) frame in the data frame, a NAV (Network Allocation Vector, network allocation vector) value used to indicate a transmission time of the MAC frame; and if the status of the channel is idle and the NAV value is 0, contending, by the device, for the channel and sending the data frame; otherwise, skipping sending, by the device, the data frame.

EP 1 528 691 A2 (Samsung Electronics Co Ltd) discloses a data transmission method of minimizing the transmission power of a terminal in a wireless communication system by exploiting the interworking between a MAC layer and a PHY layer in the WLAN communication system. The data frames sent in this network comprise preamble, header and MAC data frames. Since the header frame contains rate and length fields, the PHY layer can determine transmission times of data. By means of a network allocation vector (NAV) a terminal may use the information to time its data transmission to avoid data collisions and signal retransmission. Thereby the problem of "hidden nodes" in WLAN systems that lead to an increase of power consumption is addressed. Further disclosed is the transmission of headers (or preamble sequences) with a higher transmission power than data frames, so that hidden nodes can still receive the preambles or the headers and detect that they should not transmit data at the same time.

US 2006/221911 A1 teaches wireless communications with regards to hidden-node problems by boosting the preamble section of data frames so that all of the involved stations may detect the signal field in the preamble section, determine the length of the data packet and time their transmissions accordingly.

WO 2011/099687 A1 discloses wireless transmissions in a WLAN with regards to hidden-node problems by boosting the PCLP (physical layer convergence procedure) preamble section of data frames at a first transmission step versus the actual data fields at a second transmission step so that an access point at the coverage edge may receive the PCLP header but may not receive the actual data fields.

In a process of implementing the present invention, the inventor finds that at least the following problem exists in the prior art:

In a case in which the coverage area of the long range BSS overlaps the coverage area of the short range BSS, because transmit power of the device in the short range BSS is small, when the device in the long range BSS is far away from the device that is in the short range BSS and that is transmitting data, the device in the long range BSS possibly cannot sense a data frame sent by the device in the short range BSS. At this time, if the device in the long range BSS also starts to send a data frame, interference is caused to data transmission of the device in the short range BSS, resulting in a failure of the data transmission of the device in the short range BSS. If the transmit power of the device in the short range BSS is increased, although interference caused by data frame transmission of the device in the long range BSS can be avoided, concurrent data transmission of a device in a short range BSS that does not overlap the short range BSS is also suppressed, further affecting an overall throughput of a network.

## SUMMARY

To resolve a problem in the prior art that a device in a long range BSS cannot learn that a device in a short range BSS is transmitting data, and interference may be caused to it or concurrent transmission of the device in the short range BSS may be suppressed, embodiments of the present invention provide a data transmission method and device. The technical solutions are as follows:

According to an aspect, an embodiment of the present invention provides a data transmission method, where the method includes:

receiving, by a device in a first basic service set, a data frame sent by a device in a second basic service set, where the data frame sent by the device in the second basic service set includes a preamble sequence and a Medium Access Control frame; transmit power of the preamble sequence is first power; transmit power of the Medium Access Control frame is second power; and the first power is higher than the second power;

if the data frame received by the device in the first basic service set includes the preamble sequence but does not include the Medium Access Control frame, setting a network allocation vector value according to a signal field in the preamble sequence; and

transmitting data according to the network allocation vector value,.

wherein, when normal transmit power of an access point in the first basic service set is lower than a threshold, the network allocation vector value includes a first network allocation vector value and a second network allocation vector value, where the method further includes:

if the data frame received by the device in the first basic service set includes the preamble sequence and the Medium Access Control frame, setting the first network allocation vector value according to a duration field in a frame header of the Medium Access Control frame; and

the setting a network allocation vector value according to a signal field in the preamble sequence includes:

setting the second network allocation vector value according to the signal field in the preamble sequence.

Optionally, the setting a network allocation vector value according to a signal field in the preamble sequence includes:

obtaining, from the signal field, a frame length and a transmission rate of the Medium Access Control frame;

calculating a transfer time of the Medium Access Control frame according to the frame length and the transmission rate of the Medium Access Control frame; and

setting the network allocation vector value according to the transfer time of the Medium Access Control frame.

Preferably, the calculating a transfer time of the Medium Access Control frame according to the frame length and the transmission rate of the Medium Access Control frame includes:

determining a corresponding frame of the Medium Access Control frame according to an acknowledgement indication field in the signal field; and

if the response frame of the Medium Access Control frame is an acknowledgement frame, calculating the transfer time according to the following formula:

$$T=T_{PSDU}+T_{SIFS}+T_{ACK};$$

or

if the response frame of the Medium Access Control frame is a block acknowledgement frame, calculating the transfer time according to the following formula:

$$T=T_{PSDU}+2 \times T_{SIFS}+T_{BAR+BA};$$

or

if there is no acknowledgement response for the Medium Access Control frame, calculating the transfer time according to the following formula:

$$T=T_{PSDU};$$

or

if the response frame of the Medium Access Control frame is a frame other than the acknowledgement frame, a Clear To Send frame, and the block acknowledgement frame, calculating the transfer time according to the following formula:

$$T=T_{PSDU}+T_{SIFS}+T_{MAX\_PSDU};$$

where

$T_{PSDU}$ is an actual transfer time of the Medium Access Control frame; $T_{SIFS}$ is a short interframe space; $T_{ACK}$ is a transfer time of the acknowledgement frame; $T_{BAR+BA}$ is a transfer time of a block acknowledgement request frame and the block acknowledgement frame; and $T_{MAX\_PSDU}$ is a time for transmitting a maximum allowed Medium Access Control frame.

Optionally, when the data frame received by the device in the first basic service set includes the preamble sequence and the Medium Access Control frame, before the setting the first network allocation vector value according to a duration field in a frame header of the Medium Access Control frame, the method further includes:

if the Medium Access Control frame can be parsed, setting the first network allocation vector value according to the duration field in the frame header of the Medium Access Control frame; or
if the Medium Access Control frame cannot be parsed, setting the first network allocation vector value according to the signal field in the preamble sequence.

Optionally, the transmitting data according to the network allocation vector value includes:

if the first network allocation vector value is greater than 0, skipping sending the data frame; or
if the first network allocation vector value is 0 and the second network allocation vector value is 0, sending the preamble sequence at the first power and sending the Medium Access Control frame at the second power.

According to another aspect, an embodiment of the present invention provides a data transmission device, where the device includes:

a receiving module, configured to receive a data frame sent by a device in a second basic service set, where the data frame sent by the device in the second basic service set includes a preamble sequence and a Medium Access Control frame; transmit power of the preamble sequence is first power; transmit power of the Medium Access Control frame is second power; and the first power is higher than the second power;
a network allocation vector setting module, configured to: when the data frame received by the receiving module includes the preamble sequence but does not include the Medium Access Control frame, set a network allocation vector value according to a signal field in the preamble sequence; and
a transmission module, configured to transmit data according to the network allocation vector value that is set by the network allocation vector setting module,

wherein the network allocation vector setting module is further configured to:

when normal transmit power of an access point in a first basic service set is lower than a threshold, and the data frame received by the receiving module includes the preamble sequence and the Medium Access Control frame, set a first network allocation vector value according to a duration field in a frame header of the Medium Access Control frame; or
when normal transmit power of an access point in a first basic service set is lower than a threshold, and the received data frame includes the preamble sequence but does not include the Medium Access Control frame, set a second network allocation vector value according to the signal field in the preamble sequence.

Optionally, the network allocation vector setting module includes:

an obtaining unit, configured to obtain, from the signal field, a frame length and a transmission rate of the Medium Access Control frame;
a calculating unit, configured to calculate a transfer time of the Medium Access Control frame according to the frame length and the transmission rate of the Medium Access Control frame and obtained by the obtaining unit; and
a setting unit, configured to set the network allocation vector value according to the transfer time of the Medium Access Control frame obtained by the calculating unit.

Preferably, the calculating unit is configured to:

determine a response frame of the Medium Access Control frame according to an acknowledgement indication field in the signal field; and
when the response frame of the Medium Access Control frame is an acknowledgement frame, calculate the transfer time according to the following formula:

$$T=T_{PSDU}+T_{SIFS}+T_{ACK};$$

or
when the response frame of the Medium Access Control frame is a block acknowledgement frame, calculate the transfer time according to the following formula:

$$T=T_{PSDU}+2 \times T_{SIFS}+T_{BAR+BA};$$

or

when there is no acknowledgement response for the Medium Access Control frame, calculate the transfer time according to the following formula:

$$T=T_{PSDU};$$

or

when the response frame of the Medium Access Control frame is a frame other than the acknowledgement frame, a Clear To Send frame, and the block acknowledgement frame, calculate the transfer time according to the following formula:

$$T=T_{PSDU}+T_{SIFS}+T_{MAX\_PSDU};$$

where

$T_{PSDU}$ is an actual transfer time of the Medium Access Control frame; $T_{SIFS}$ is a short interframe space; $T_{ACK}$ is a transfer time of the acknowledgement frame; $T_{BAR+BA}$ is a transfer time of a block acknowledgement request frame and the block acknowledgement frame; and $T_{MAX\_PSDU}$ is a time for transmitting a maximum allowed Medium Access Control frame.

Optionally, the network allocation vector setting module is further configured to:

when the data frame received by the receiving module includes the preamble sequence and the Medium Access Control frame, before the setting a first network allocation vector value according to a duration field in a frame header of the Medium Access Control frame,
when the Medium Access Control frame can be parsed, set the first network allocation vector value according to the duration field in the frame header of the Medium Access Control frame; or
when the Medium Access Control frame cannot be parsed, set the first network allocation vector value according to the signal field in the preamble sequence.

Optionally, the transmission module is configured to:

when the first network allocation vector value is greater than 0, skip sending the data frame; or
when the first network allocation vector value is 0 and the second network allocation vector value is 0, send the preamble sequence at the first power and send the Medium Access Control frame at the second power.

Optionally, the transmission module is configured to:

when the first network allocation vector value is 0 and the second network allocation vector value is 0, send the preamble sequence by using the sum of the second power and a predetermined value, and send the Medium Access Control frame at the second power, where the predetermined value is greater than 0.

Beneficial effects brought by the technical solutions provided in the embodiments of the present invention are as follows:
A NAV value used to indicate a transfer time of a MAC frame is set according to a SIG field in a Preamble sequence, and the Preamble sequence is sent by a device in a second BSS by using first power, where the first power is higher than second power used for sending the MAC frame, so as to enable a device in a first BSS to obtain the transfer time of the MAC frame. When the first BSS is a long range BSS, the device in the first BSS (long range BSS) may receive the Preamble sequence sent by the device in the second BSS (short range BSS), so as to obtain a data transmission time of the device in the second BSS and set the NAV value according to the data transmission time; therefore, when data is transmitted according to the NAV value, no interference is caused to data transmission of the device in the second BSS, and further, the data transmission of the device in the second BSS does not fail. When the first BSS is a short range BSS, the device in the second BSS sends the Preamble sequence at the first power, and sends the MAC frame at the second power, where the first power is higher than the second power; therefore, the device in the second BSS suppresses data transmission of the device in the first BSS (short range BSS) only when sending the Preamble sequence, and does not suppress data transmission of the device in the first BSS when sending the MAC frame, thereby avoiding a problem in the prior art that an increase in transmit power of an entire data frame results in suppression of concurrent data transmission of devices in two short range BSSs (the first BSS and the second BSS) that do not overlap.

**BRIEF DESCRIPTION OF DRAWINGS**

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic diagram of an application scenario of an embodiment of the present invention;
FIG. 2 is a flowchart of a data transmission method according to Embodiment 1 of the present invention;
FIG. 3 is a flowchart of a data transmission method according to Example 2

FIG. 4 is a schematic structural diagram of a data frame according to Example 2

FIG. 5 is a schematic structural diagram of a signal field in an 802.11 physical layer according to Example 2;

FIG. 6 is a schematic structural diagram of a signal field in an 802.11ah physical layer of 1 MHz according to Example 2;

FIG. 7 is a schematic structural diagram of a signal field in an 802.11ah physical layer of multiple users according to Example 2;

FIG. 8 is a flowchart of a data transmission method according to Embodiment 3 of the present invention;

FIG. 9 is a schematic structural diagram of a data transmission device according to Embodiment 4 of the present invention;

FIG. 10 is a schematic structural diagram of a data transmission device according to Example 5;

FIG. 11 is a schematic structural diagram of a data transmission device according to Embodiment 6 of the present invention; and

FIG. 12 is a schematic structural diagram of a specific implementation manner of a data transmission device according to Embodiment 7 of the present invention.

## DESCRIPTION OF EMBODIMENTS

To make the objectives, technical solutions, and advantages of the present invention clearer, the following further describes the embodiments of the present invention in detail with reference to the accompanying drawings.

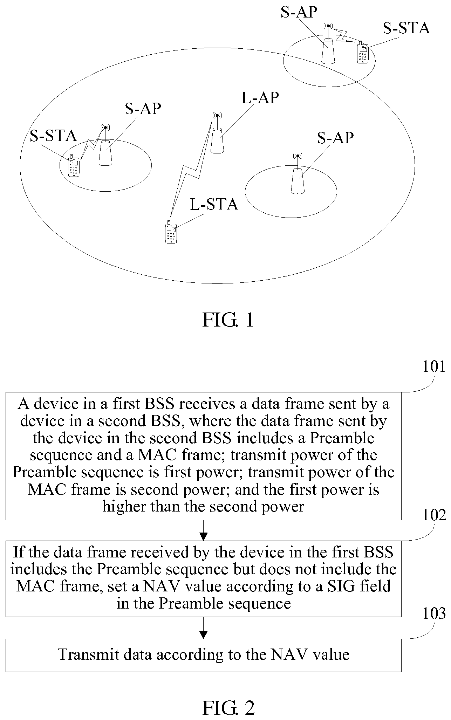

The following first describes an application scenario of an embodiment of the present invention with reference to FIG. 1. The application scenario is only an example and does not constitute a limitation on the present invention. As previously mentioned, according to different coverage areas, BSSs may be classified into a long range BSS and a short range BSS. In this embodiment of the present invention, the long range BSS refers to a BSS in which normal transmit power of an AP is higher than the threshold, and the short range BSS refers to a BSS in which normal transmit power of an AP is lower than the threshold. The threshold may be manually set according to an actual situation. As shown in FIG. 1, the long range BSS includes a long range AP L-AP and a long range STA L-STA that communicate with each other, where normal transmit power used by the long range AP L-AP to send data to the long range STA L-STA is higher than the threshold, and a maximum value of normal transmit power used by the long range STA L-STA to send data to the long range AP L-AP is the normal transmit power of the long range AP L-AP. The short range BSS includes a short range AP S-AP and a short range STA S-STA that communicate with each other, where normal transmit power used by the short range AP S-AP to send data to the short range STA S-STA is lower than the threshold, and a maximum value of normal transmit power used by the short range STA S-STA to send data to the short range AP S-AP is the normal transmit power of the short range AP S-AP.

In FIG. 1, ellipses indicate coverage areas of the BSSs. As shown in FIG. 1, three short range BSSs exist in the coverage area of one long range BSS. The BSSs whose coverage areas overlap may be referred to as an OBSS (Overlapping Basic Service Set, overlapping basic service set). In FIG. 1, coverage areas of two short range BSSs are located within the coverage area of the long range BSS, and the coverage area of the third short range BSS partially overlaps the coverage area of the long range BSS. It is easy to figure out that, both a case in which the coverage area of the short range BSS is located within the coverage area of the long range BSS, and a case in which the coverage area of the short range BSS partially overlaps the coverage area of the long range BSS, pertain to the BSSs whose coverage areas overlap in the embodiments of the present invention.

## Embodiment 1

An embodiment of the present invention provides a data transmission method, applied to the foregoing BSSs whose coverage areas overlap. The method in this embodiment is executed by a device (which may be an AP or a STA) in a first BSS. Referring to FIG. 2, the method includes:

Step 101: A device in a first BSS receives a data frame sent by a device in a second BSS.

In an embodiment, the first BSS may be a long range BSS or a short range BSS. The second BSS may be a short range BSS, where normal transmit power of an AP in the short range BSS, that is, normal transmit power of a short range AP, is lower than a threshold. The data frame sent by the device in the second BSS includes a Preamble (preamble) sequence and a MAC frame. Transmit power of the Preamble sequence is first power, and transmit power of the MAC frame is second power. That is, the device in the second BSS sends the Preamble sequence of the data frame at the first power, and sends the MAC frame of the data frame at the second power. The first power is higher than the second power.

In specific implementation, the second power may be normal transmit power of a device in a BSS. For a device in the long range BSS, the second power is higher than the threshold; for a device in the short range BSS, the second power is lower than the threshold.

Step 102: If the data frame received by the device in the first BSS includes the Preamble sequence but does not include the MAC frame, set a NAV value according to a SIG (Signal, signal) field in the Preamble sequence.

In an implementation manner of this embodiment, that is, in a case in which the first BSS is a long range BSS, the NAV value is a first NAV value, where the first NAV value is set according to a Duration field in a frame header in the MAC frame or set according to the SIG field in the Preamble sequence (for details, refer to Embodiment 2). In another implementation manner of this embodiment, that is, in a case in which the first BSS is a short range BSS, the NAV value includes a first NAV value and a second NAV value, where the first NAV value is set according to a Duration field in a frame header in the MAC frame or set according to the SIG field in the Preamble sequence, and the second NAV value is set according to the SIG field in the Preamble sequence (for details, refer to Embodiment 3).

Step 103: Transmit data according to the NAV value.

In this embodiment of the present invention, by setting, according to a SIG field in a Preamble sequence, a NAV value used to indicate a transfer time of a MAC frame, the Preamble sequence is sent by a device in a second BSS by using first power, where the first power is higher than second power used for sending the MAC frame, so as to enable a device in a first BSS to obtain the transfer time of the MAC frame. When the first BSS is a long range BSS, the device in the first BSS (long range BSS) can receive the Preamble sequence sent by the device in the second BSS (short range BSS), so as to obtain a data transmission time of the device in the second BSS and set the NAV value according to the data transmission time; therefore, when data is transmitted according to the NAV value, no interference is caused to data transmission of the device in the second BSS, and further, the data transmission of the device in the second BSS does not fail. When the first BSS is a short range BSS, the device in the second BSS sends the Preamble sequence at the first power, and sends the MAC frame at the second power, where the first power is higher than the second power; therefore, the device in the second BSS suppresses data transmission of the device in the first BSS (short range BSS) only when sending the Preamble sequence, and does not suppress data transmission of the device in the first BSS when sending the MAC frame, thereby avoiding a problem in the prior art that an increase in transmit power of an entire data frame results in suppression of concurrent data transmission of devices in two short range BSSs (the first BSS and the second BSS) that do not overlap.

**Example 2**

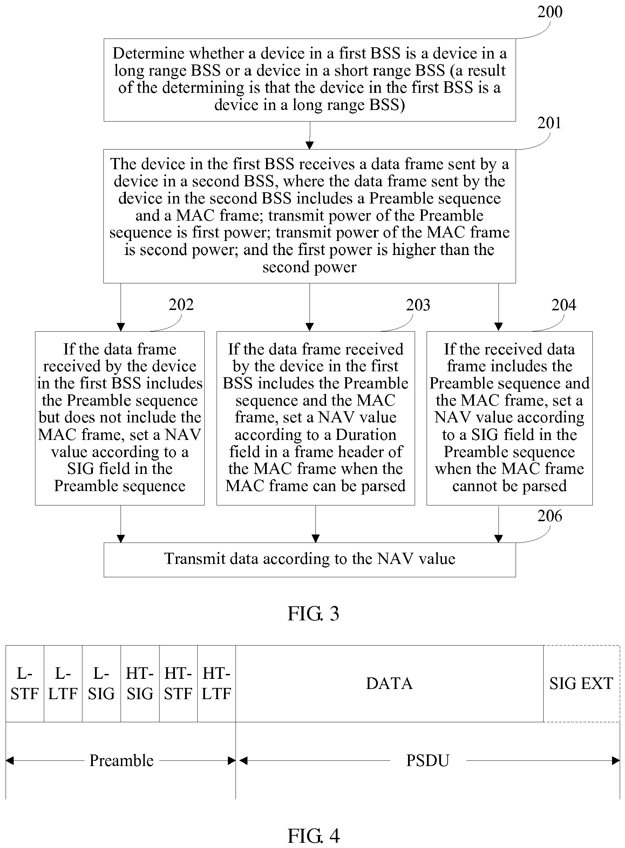

An example not being part of the invention as claimed is described in which a device in a first BSS is a device in a long range BSS, the data transmission method provided in Embodiment 1 of the present invention. The method in this example is executed by the device (which may be an AP or a STA) in the first BSS. Referring to FIG. 3, the method includes:
Step 201: A device in a first BSS receives a data frame sent by a device in a second BSS.

In an embodiment, the second BSS may be a short range BSS, where normal transmit power of an AP in the short range BSS is lower than a threshold. The data frame sent by the device in the second BSS includes a Preamble sequence and a MAC frame. Transmit power of the Preamble sequence is first power, and transmit power of the MAC frame is second power. That is, the device in the second BSS sends the Preamble sequence of the data frame at the first power, and sends the MAC frame of the data frame at the second power. The first power is higher than the second power.

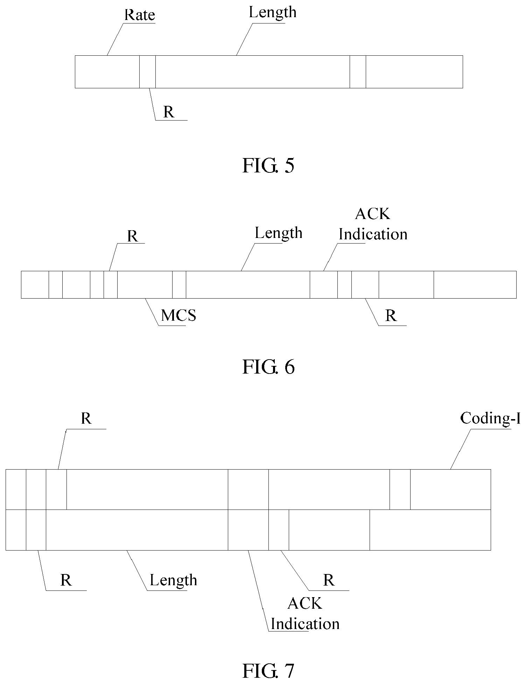

FIG. 4 shows a frame structure of a data frame in an embodiment of the present invention. The data frame is also referred to as a PPDU (Physical layer convergence procedure Protocol Data Unit, physical layer convergence procedure protocol data unit), including a Preamble sequence and a PSDU (Physical layer convergence procedure Service Data Unit, physical layer convergence procedure service data unit). The Preamble sequence includes a field that can be parsed by a device earlier than 802.11 and is used to be compatible with the device earlier than 802.11, such as an L-STF (Legacy Short Training Field, legacy short training field), an L-LTF (Legacy Long Training Field, legacy long training field), or an L-SIG (Legacy Signal, legacy signal) field, and a field that cannot be parsed by the device earlier than 802.11 and is used to indicate Preamble sequence information of 802.11, such as an HT-SIG (High Throughput Signal, high throughput signal) field, an HT-STF (High Throughput Short Training Field, high throughput short training field), or an HT-LTF (High Throughput Long Training Field, high throughput long training field). The PSDU, that is, the MAC frame, includes a DATA (data) field and a SIG EXT (Signal Extension, signal extension) field. The frame header of the MAC frame is located in the DATA field, and the frame header of the MAC frame includes the Duration field and another field (not shown in the figure). The SIG field in the Preamble sequence, that is, the L-SIG field, includes a Length (length) field used to indicate a length of transmitted data, and a Rate (rate) field used to indicate a transmission rate (refer to a schematic diagram of a SIG field in an 802.11 physical layer shown in FIG. 5) or an MCS (Modulation and Coding Scheme, modulation and coding scheme) field (refer to a schematic diagram of a SIG field in an 802.11 ah physical layer of 1 MHz shown in FIG. 6) or a Coding-I (first coding) field (refer to a schematic diagram of a SIG field in an 802.11ah physical layer of multiple users shown in FIG. 7). The SIG field in the Preamble sequence may further include an ACK (Acknowledgement) Indication (indication) field used to indicate types of response frames (refer to FIG. 6 and FIG. 7) and an R (reserved, reserved) bit (refer to FIG. 5, FIG. 6, and FIG. 7).

Step 202: If the data frame received by the device in the first BSS includes the Preamble sequence but does not include the MAC frame, set a NAV value according to a SIG field in the Preamble sequence.

It should be noted that, in this embodiment, the NAV value includes a first NAV value.

In an implementation manner of this embodiment, step 202 may include:
Step 2021: Obtain, from the SIG field, a frame length and a transmission rate that are of the MAC frame.

Optionally, step 2021 may include: obtaining the transmission rate of the MAC frame from a field indicating a transmission rate in the SIG field; obtaining a length of the DATA field from a field indicating a length of transmitted data in the SIG field; and obtaining the frame length of the MAC frame according to the length of the DATA field.

Step 2022: Calculate a transfer time of the MAC frame according to the frame length and the transmission rate that are of the MAC frame.

Optionally, step 2022 may include: calculating the transfer time according to the following formula:

$$T = L/V,$$

where
L indicates the frame length of the MAC frame and V indicates the transmission rate of the MAC frame.

Preferably, step 2022 may include:

determining the response frame of the MAC frame according to the ACK Indication (acknowledgement indication) field in the SIG field; and
if the response frame of the MAC frame is an ACK frame, that is, ACK Indication=00, calculating the transfer time according to the following formula:

$$T = T_{PSDU} + T_{SIFS} + T_{ACK};$$

or
if the response frame of the MAC frame is a BA (Block Acknowledgement, block acknowledgement) frame, that is, ACK Indication=01, calculating the transfer time according to the following formula:

$$T = T_{PSDU} + 2 \times T_{SIFS} + T_{BAR+BA};$$

or
if there is no acknowledgement response for the MAC frame, that is, ACK Indication=10, calculating the transfer time according to the following formula:

$$T = T_{PSDU};$$

or
if the response frame of the MAC frame is a frame other than the ACK frame, a CTS (Clear To Send, Clear To Send) frame, and the BA frame, calculating the transfer time according to the following formula:

$$T = T_{PSDU} + T_{SIFS} + T_{MAX\_PSDU};$$

where
$T_{PSDU}$ is an actual transfer time of the MAC frame (that is, a time used for transmitting only the MAC frame); $T_{SIFS}$ is a SIFS (Short Inter-Frame Space, short interframe space); $T_{ACK}$ is a transfer time of the ACK frame; $T_{BAR+BA}$ is a transfer time of a BAR (Block Acknowledgement Request, block acknowledgement request) frame and the BA frame; and $T_{MAX\_PSDU}$ is a transfer time for transmitting a maximum allowed MAC frame.

Specifically, $T_{PSDU}=L/V$, where L indicates the frame length of the MAC frame and V indicates the transmission rate of the MAC frame.

Step 2023: Set the NAV value according to the transfer time of the MAC frame.

In specific implementation, if the NAV value does not have a current value, the NAV value may be set according to the transfer time of the MAC frame; if the NAV value has a current value, the NAV value may be set according to a larger value of the current value of the NAV value and the transfer time of the MAC frame.

Step 203: If the data frame received by the device in the first BSS includes the Preamble sequence and the MAC frame, set a NAV value according to a Duration field in a frame header of the MAC frame when the MAC frame can be parsed.

In an implementation manner of this embodiment, step 203 may include: obtaining the transfer time of the MAC frame from the Duration field in the frame header of the MAC frame; and setting the NAV value according to the transfer time of the MAC frame.

In specific implementation, if the NAV value does not have a current value, the NAV value may be set according to the transfer time of the MAC frame; if the NAV value has a current value, the NAV value may be set according to a larger value of the current value of the NAV value and the transfer time of the MAC frame.

Step 204: If the received data frame includes the Preamble sequence and the MAC frame, set a NAV value according to a SIG field in the Preamble sequence when the MAC frame cannot be parsed.

Step 205: Transmit data according to the NAV value. This step is performed after step 202, step 203, or step 204.

In an implementation manner of this embodiment, step 205 may include: if the NAV value is 0, sending the data frame at the second power; if the NAV value is greater than 0, skipping sending the data frame.

Preferably, the sending the data frame at the second power may include: if the device in the first BSS is a long range AP, sending the data frame by using normal transmit power of the long range AP; if the device in the first BSS is a long range STA, sending the data frame by using normal transmit power of the long range STA. The normal transmit power of the long range AP is a fixed value, and the normal transmit power of the long range STA is determined according to a power attenuation situation of a Beacon (beacon) frame sent by a long range AP communicating with the long range STA to the long range STA, where the Beacon frame includes the normal transmit power of the long range AP. The long range AP obtains the power attenuation situation of the Beacon frame according to a difference between the normal transmit power that is of the long range AP and obtained from the Beacon frame and power when the Beacon frame is received.

In another implementation manner of this embodiment, the method may further include: performing physical carrier sense on a channel to obtain a status of the channel. This step is performed before step 205.

Accordingly, step 205 includes: transmitting data according to the status of the channel and the NAV value.

Specifically, the performing physical carrier sense on a channel to obtain a status of the channel may include: if a noise power ratio on the channel is higher than the threshold, determining that the channel is in a busy state; otherwise, determining that the channel is in an idle state.

In still another implementation manner of this embodiment, the method may further include step 200: determining whether the device in the first BSS is a device in the long range BSS or a device in the short range BSS. Step 200 needs to be performed before step 202, step 203, or step 204, but there is no sequence between step 200 and step 201.

In specific implementation, for a device in a BSS, in a case in which a configuration parameter remains unchanged, step 200 generally needs to be performed only once, and is preferably performed before step 201 in this case.

Optionally, step 200 may include: when normal transmit power of the device in the first BSS is higher than the threshold, determining that the device in the first BSS is the device in the long range BSS; or when normal transmit power of the device in the first BSS is lower than the threshold, determining that the device in the first BSS is the device in the short range BSS. The device in the short range BSS acquires the threshold from a Beacon frame broadcasted by the long range AP.

In this example of the present invention, by setting, according to a SIG field in a Preamble sequence, a NAV value used to indicate a transfer time of a MAC frame, the Preamble sequence is sent by a device in a second BSS by using first power, where the first power is higher than second power used for sending the MAC frame, so as to enable a device in a first BSS to obtain the transfer time of the MAC frame. When the first BSS is a long range BSS, the device in the first BSS (long range BSS) may receive the Preamble sequence sent by the device in the second BSS (short range BSS), so as to obtain a data transmission time of the device in the second BSS and set the NAV value according to the data transmission time; therefore, when data is transmitted according to the NAV value, no interference is caused to data transmission of the device in the second BSS, and further, the data transmission of the device in the second BSS does not fail.

**Embodiment 3**

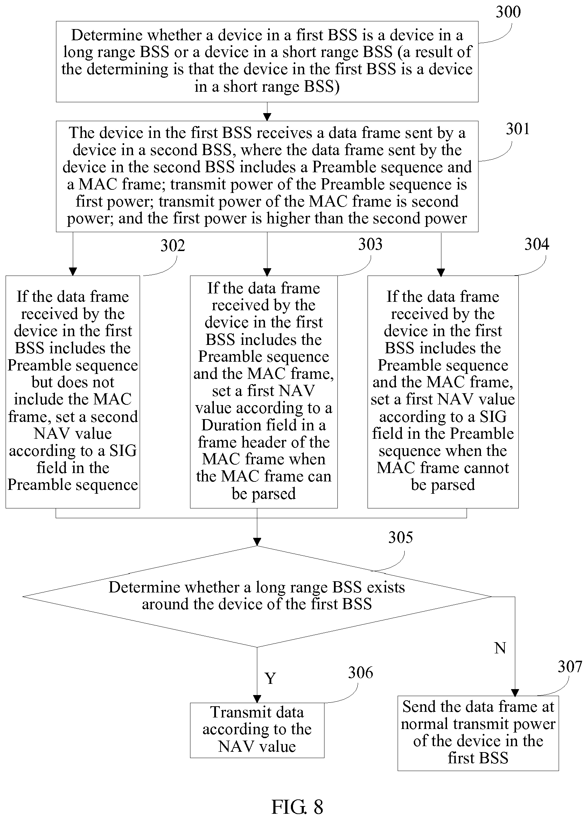

An embodiment of the present invention describes, by using an example in which a device in a first BSS is a device in a short range BSS, the data transmission method provided in Embodiment 1 of the present invention. The method in this embodiment is executed by the device (which may be an AP or a STA) in the first BSS. Referring to FIG. 8, the method includes:

Step 301: A device in a first BSS receives a data frame sent by a device in a second BSS.

In an embodiment, the second BSS may be a short range BSS, where normal transmit power of an AP in the short range BSS is lower than a threshold. The data frame sent by the device in the second BSS includes a Preamble sequence and a MAC frame. Transmit power of the Preamble sequence is first power, and transmit power of the MAC frame is second power. That is, the device in the second BSS sends the Preamble sequence of the data frame at the first power, and sends the MAC frame of the data frame at the second power. The first power is higher than the second power.

Step 302: If the data frame received by the device in the first BSS includes the Preamble sequence but does not include the MAC frame, set a second NAV value according to a SIG field in the Preamble sequence.

Step 303: If the data frame received by the device in the first BSS includes the Preamble sequence and the MAC frame, set a first NAV value according to a Duration field in a frame header of the MAC frame when the MAC frame can be parsed.

Optionally, step 303 may be the same as step 203 in Embodiment 2, and details are not described herein again.

Step 304: If the data frame received by the device in the first BSS includes the Preamble sequence and the MAC frame, set a first NAV value according to a SIG field in the Preamble sequence when the MAC frame cannot be parsed.

Optionally, step 304 may be the same as step 202 in Example 2, and details are not described herein again.

Step 305: Determine whether a long range BSS exists around the device in the first BSS. If the long range BSS exists around the device in the first BSS, step 306 is performed; if the long range BSS does not exist around the device in the first BSS, step 307 is performed. This step is performed after step 302, step 303, or step 304.

In specific implementation, the determining whether a long range BSS exists around the device in the first BSS may include:

receiving a Beacon frame broadcasted by an AP and acquiring normal transmit power of the AP from the Beacon frame; comparing the normal transmit power of the AP with the threshold; and if normal transmit power of at least one AP is higher than the threshold, determining that the long range BSS exists around the device in the first BSS; otherwise, determining that the long range BSS does not exist around the device in the first BSS. The threshold is obtained from the Beacon frame broadcasted by the long range AP.

Step 306: Transmit data according to the NAV value.

As previously mentioned, in this embodiment, the NAV value includes the first NAV value and the second NAV value. The first NAV value is set according to the SIG field in the Preamble sequence or set according to the Duration field in the frame header of the MAC frame, and the second NAV value is set according to the SIG field in the Preamble sequence. Both the first NAV value and the second NAV value are used to indicate the transfer time of the MAC frame.

In an implementation manner of this embodiment, step 306 may include: if the first NAV value is greater than 0, skipping sending the data frame; if the first NAV value is 0 and the second NAV value is 0, sending the Preamble sequence at the first power, and sending the MAC frame at the second power; if the first NAV value is 0, and the second NAV value is greater than 0, sending the data frame at the second power.

In this embodiment, the first power may equal the sum of the second power and a predetermined value, where the predetermined value is greater than 0.

In specific implementation, the predetermined value may be a difference between the normal transmit power of the long range AP and the normal transmit power of the short range AP, where the normal transmit power of the long range AP is higher than the threshold.

Preferably, the sending the MAC frame at the second power or sending the data frame at the second power may include:

If the device in the first BSS is a short range AP, sending the MAC frame by using normal transmit power of the short range AP or sending the data frame by using normal transmit power of the short range AP; if the device in the first BSS is a short range STA, sending the MAC frame by using normal transmit power of the short range STA or sending the data frame by using normal transmit power of the short range STA. The normal transmit power of the short range AP is a fixed value, and the normal transmit power of the short range STA is determined according to a power attenuation situation of a Beacon frame sent by a short range AP communicating with the short range STA to the short range STA, where the Beacon frame includes the normal transmit power of the short range AP. The short range STA obtains the power attenuation situation of the Beacon frame according to a difference between the normal transmit power that is of the short range AP and obtained from the Beacon frame and power when the Beacon frame is received.

In another implementation manner of this embodiment, step 306 may further include: if the first NAV value is 0 and the second NAV value is greater than 0 and a time required for the second NAV value to decrease to 0 is less than a data transmission time of the device in the first BSS, after the second NAV value decreases to 0, sending the Preamble sequence at the first power and sending the MAC frame at the second power.

Preferably, when the Preamble sequence is sent at the first power, a bit, such as an R bit, in the SIG field may be used to indicate that the Preamble sequence is sent at the first power. For example, that a value on the R bit is 1 indicates that the Preamble sequence is sent at the first power, and that a value on the R bit is 0 indicates that the Preamble sequence is sent at the second power.

In still another implementation manner of this embodiment, a Preamble sequence of a response frame of the MAC frame may be sent at the second power. For example, when the response frame of the MAC frame is an ACK frame, that is, ACK Indication=00 in the SIG field in the Preamble sequence, the Preamble sequence of the ACK frame is sent at the second power. For another example, when the response frame of the MAC frame is a BA frame, that is, ACK Indication=01 in the SIG field in the Preamble sequence, the Preamble sequence of the BA frame and a BAR frame is sent at the second power.

Step 307: Transmit the data frame at the second power.

In still another implementation manner of this embodiment, the method may further include: performing physical carrier sense on a channel to obtain a status of the channel. This step is performed before step 306.

Accordingly, step 306 includes: transmitting data according to the status of the channel and the NAV value.

Specifically, the performing physical carrier sense on a channel to obtain a status of the channel may be the same as the performing physical carrier sense on a channel to obtain a status of the channel in Example 2, and details are not described herein again.

In still another implementation manner of this embodiment, the method may further include step 300: determining whether the device in the first BSS is a device in the long range BSS or a device in the short range BSS. Step 300 needs to be performed before step 302, step 303, or step 304, but there is no sequence between step 300 and step 301.

In specific implementation, for a device in a BSS, in a case in which a configuration parameter remains unchanged, step 300 generally needs to be performed only once, and is preferably performed before step 301 in this case.

Optionally, step 300 may be the same as step 200 in Embodiment 2, and details are not described herein again.

It should be noted that, in Embodiment 1, Embodiment 2, and Embodiment 3, before performing virtual carrier sense, the device in the first BSS receives the Beacon frame broadcasted by the long range AP and acquires the threshold and the predetermined value (the difference between the normal transmit power of the device in the long range BSS and the normal transmit power of the device in the short range BSS) from the Beacon frame; the device in the first BSS adjusts an AGC (Automatic Gain Control, automatic gain control) parameter according to the predetermined value, so that power after the data is processed is consistent.

In this embodiment of the present invention, by setting, according to a SIG field in a Preamble sequence, a NAV value used to indicate a transfer time of a MAC frame, the Preamble sequence is sent by a device in a second BSS by using first power, where the first power is than second power used for sending the MAC frame, so as to enable a device in a first BSS to obtain the transfer time of the MAC frame. When the first BSS is a short range BSS, the device in the second BSS sends the Preamble sequence at the first power, and sends the MAC frame at the second power, where the first power is higher than the second power; therefore, the device in the second BSS suppresses data transmission of the device in the first BSS (short range BSS) only when sending the Preamble sequence, and does not suppress data transmission of the device in the first BSS when sending the MAC frame, thereby avoiding a problem in the prior art that an increase in transmit power of an entire data frame results in suppression of concurrent data transmission of devices in two short range BSSs (the first BSS and the second BSS) that do not overlap.

**Embodiment 4**

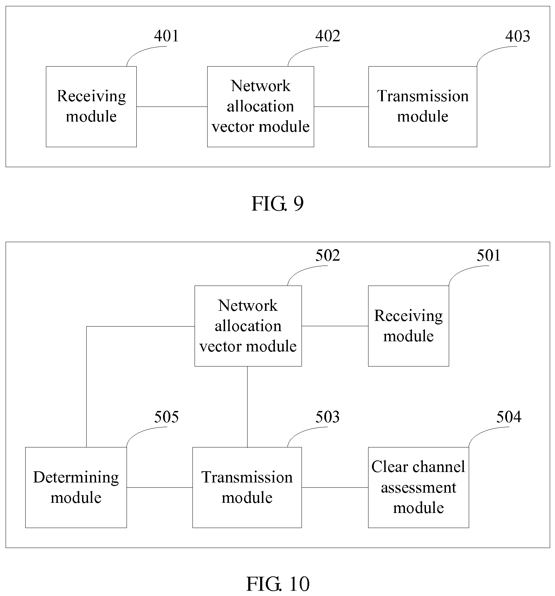

An embodiment of the present invention provides a data transmission device, applied to the data transmission method provided in Embodiment 1. Referring to FIG. 9, the device includes:

> a receiving module 401, configured to receive a data frame sent by a device in a second BSS, where the second BSS may be a short range BSS, and normal transmit power of an AP in the short range BSS is lower than a threshold, where the data frame sent by the device in the second BSS includes a Preamble sequence and a MAC frame; transmit power of the Preamble sequence is first power; transmit power of the MAC frame is second power; and the first power is higher than the second power;
> a NAV setting module 402, configured to: when the data frame received by the receiving module 401 includes the Preamble sequence but does not include the MAC frame, set a NAV value according to a SIG field in the Preamble sequence; and
> a transmission module 403, configured to transmit data according to the NAV value that is set by the NAV setting module 402.

In this embodiment of the present invention, by setting, according to a SIG field in a Preamble sequence, a NAV value used to indicate a transfer time of a MAC frame, the Preamble sequence is sent by a device in a second BSS by using first power, where the first power is higher than second power used for sending the MAC frame, so as to enable a device in a first BSS to obtain the transfer time of the MAC frame. When the first BSS is a long range BSS, the device in the first BSS (long range BSS) may receive the Preamble sequence sent by the device in the second BSS (short range BSS), so as to obtain a data transmission time of the device in the second BSS and set the NAV value according to the data transmission time; therefore, when data is transmitted according to the NAV value, no interference is caused to data transmission of the device in the second BSS, and further, the data transmission of the device in the second BSS does not fail. When the first BSS is a short range BSS, the device in the second BSS sends the Preamble sequence at the first power, and sends the MAC frame at the second power, where the first power is higher than the second power; therefore, the device in the second BSS suppresses data transmission of the device in the first BSS (short range BSS) only when sending the Preamble sequence, and does not suppress data transmission of the device in the first BSS when sending the MAC frame, thereby avoiding a problem in the prior art that an increase in transmit power of an entire data frame results in suppression of concurrent data transmission of devices in two short range BSSs (the first BSS and the second BSS) that do not overlap.

**Example 5**

An example not being part of the invention as claimed is described, in which the device is a device in a long range BSS, the data transmission device provided in Embodiment 4 of the present invention, which is applied to the data transmission method provided in Example 2. Referring to FIG. 10, the device includes:

> a receiving module 501, configured to receive a data frame sent by a device in a second BSS, where the second BSS may be a short range BSS, and normal transmit power of an AP in the short range BSS is lower than a threshold, where the data frame sent by the device in the second BSS includes a Preamble sequence and a MAC frame; transmit power of the Preamble sequence is first power; transmit power of the MAC frame is second power; and the first power is higher than the second power;
> a NAV setting module 502, configured to: when the data frame received by the receiving module 501 includes the Preamble sequence but does not include the MAC frame, set a NAV value according to a SIG field in the Preamble sequence; and

a transmission module 503, configured to transmit data according to the NAV value that is set by the NAV setting module 502.

It should be noted that, in this embodiment, the NAV value includes a first NAV value.

In an implementation manner of this embodiment, the NAV setting module 502 may include:

an obtaining unit, configured to obtain, from the SIG field, a frame length and a transmission rate that are of the MAC frame;

a calculating unit, configured to calculate a transfer time of the MAC frame according to the frame length and the transmission rate that are of the MAC frame and obtained by the obtaining unit; and

a setting unit, configured to set a NAV value according to the transfer time that is of the MAC frame and obtained by the calculating unit.

In this embodiment, when the NAV value does not have a current value, the NAV value may be set according to the transfer time of the MAC frame; when the NAV value has a current value, the NAV value may be set according to a larger value of the current value of the NAV value and the transfer time of the MAC frame.

Optionally, the obtaining unit may be configured to obtain the transmission rate of the MAC frame from a field indicating a transmission rate in the SIG field; obtain a length of the DATA field from a field indicating a length of transmitted data in the SIG field; and obtain the frame length of the MAC frame according to the length of the DATA field.

Optionally, the calculating unit may be configured to calculate the transfer time according to the following formula:

$$T=L/V,$$

where

L indicates the frame length of the MAC frame and V indicates the transmission rate of the MAC frame.

Preferably, the calculating unit may be configured to determine a corresponding frame of the MAC frame according to an ACK Indication field in the SIG field; and when the response frame of the MAC frame is an ACK frame, that is, ACK Indication=00, calculate the transfer time according to the following formula:

$$T=T_{PSDU}+T_{SIFS}+T_{ACK};$$

or

when the response frame of the MAC frame is a BA frame, that is, ACK Indication=01, calculate the transfer time according to the following formula:

$$T=T_{PSDU}+2 \times T_{SIFS}+T_{BAR+BA};$$

or

when there is no acknowledgement response for the MAC frame, that is, ACK Indication=10, calculate the transfer time according to the following formula:

$$T=T_{PSDU};$$

or

when the response frame of the MAC frame is a frame other than the ACK frame, a CTS frame, and the BA frame, calculate the transfer time according to the following formula:

$$T=T_{PSDU}+T_{SIFS}+T_{MAX\_PSDU}; '$$

where

$T_{PSDU}$ is an actual transfer time of the Medium Access Control frame; $T_{PSDU}=L/V$, where L indicates the frame length of the MAC frame and V indicates the transmission rate of the MAC frame; $T_{SIFS}$ is a SIFS; $T_{ACK}$ is a transfer time of the ACK frame; $T_{BAR+BA}$ is a transfer time of a BAR frame and the BA frame; and $T_{MAX\_PSDU}$ is a transfer time for transmitting a maximum allowed PSDU, that is, MAC frame.

In an implementation manner of this example the NAV setting module 502 may be further configured to: when the data frame received by the receiving module 501 includes the Preamble sequence and the MAC frame, and the MAC frame can be parsed, set a NAV value according to a Duration field in a frame header of the MAC frame; when the data frame received by the receiving module 501 includes the Preamble sequence and the MAC frame, and the MAC cannot be parsed, set a NAV value according to a SIG field in the Preamble sequence.

In this example if the NAV value does not have a current value, the NAV value may be set according to the transfer time of the MAC frame; if the NAV value has a current value, the NAV value may be set according to a larger value of the current value of the NAV value and the transfer time of the MAC frame.

In another implementation manner of this example, the transmission module 503 may be configured to: when the NAV value is 0, send the data frame at the second power; when the NAV value is greater than 0, skip sending the data frame.

In still another implementation manner of this example, the device may further include a clear channel assessment module 504, configured to perform physical carrier sense on a channel to obtain a status of the channel.

Accordingly, the transmission module 503 is configured to transmit data according to the status that is of the channel and obtained by the clear channel assessment module 504 and the NAV value that is set by the NAV setting module 502.

Specifically, the clear channel assessment module 504 may be configured to: when a noise power ratio on the channel is higher than a threshold, determine that the channel is in a busy state; otherwise, determine that the channel is in an idle state.

In still another implementation manner of this example, the device may further include a determining module 505, configured to determine whether the device is a device in the long range BSS or a device in the short range BSS.

Optionally, the determining module 505 may be configured to: when normal transmit power of the device is higher than the threshold, determine that the device is the device in the long range BSS; or when normal transmit power of the device is lower than the threshold, determine that the device is the device in the short range BSS. The device in the short range BSS may acquire the threshold from a Beacon frame broadcasted by the long range AP.

In this example by setting, according to a SIG field in a Preamble sequence, a NAV value used to indicate a transfer time of a MAC frame, the Preamble sequence is sent by a device in a second BSS by using first power, where the first power is higher than second power used for sending the MAC frame, so as to enable a device in a first BSS to obtain the transfer time of the MAC frame. When the first BSS is a long range BSS, the device in the first BSS (long range BSS) may receive the Preamble sequence sent by the device in the second BSS (short range BSS), so as to obtain a data transmission time of the device in the second BSS and set the NAV value according to the data transmission time; therefore, when data is transmitted according to the NAV value, no interference is caused to data transmission of the device in the second BSS, and further, the data transmission of the device in the second BSS does not fail.

**Embodiment 6**

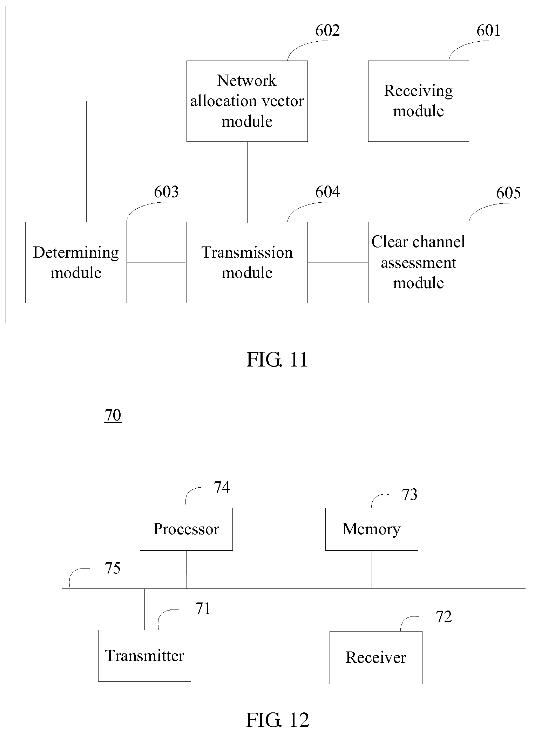

An embodiment of the present invention describes, by using an example in which the device is a device in a short range BSS, the data transmission device provided in Embodiment 4 of the present invention, which is applied to the data transmission method provided in Embodiment 3. Referring to FIG. 11, the device includes:

a receiving module 601, configured to receive a data frame sent by a device in a second BSS, where the second BSS may be a short range BSS, and normal transmit power of an AP in the short range BSS is lower than a threshold, where the data frame sent by the device in the second BSS includes a Preamble sequence and a MAC frame; transmit power of the Preamble sequence is first power; transmit power of the MAC frame is second power; and the first power is higher than the second power;

a NAV setting module 602, configured to: when the data frame received by the receiving module 601 includes the Preamble sequence but does not include the MAC frame, set a second NAV value according to a SIG field in the Preamble sequence;

a determining module 603, configured to determine whether a long range BSS exists around the device; and

a transmission module 604, configured to transmit data according to a determining result obtained by the determining module 603; and when the determining result obtained by the determining module 603 is that the long range BSS exists around the device, configured to transmit data according to the NAV value obtained by the NAV setting module 602; or when the determining result obtained by the determining module 603 is that the long range BSS does not exist around the device, configured to send the data frame by using the normal transmit power of the device.

It should be noted that, in this embodiment, the device in the short range BSS sets the NAV value according to the SIG field in the Preamble sequence, where the NAV value includes the first NAV value and the second NAV value.

In an implementation manner of this embodiment, the NAV setting module 602 may be further configured to: when the data frame received by the receiving module 601 includes the Preamble sequence and the MAC frame, and the MAC frame can be parsed, set a first NAV value according to a Duration field in a frame header of the MAC frame; when the data frame received by the receiving module 601 includes the Preamble sequence and the MAC frame, and the MAC cannot be parsed, set a first NAV value according to the SIG field in the Preamble sequence.

In specific implementation, the determining module 603 may include:

an acquiring unit, configured to receive a Beacon frame broadcasted by an AP and acquire normal transmit power of the AP from the Beacon frame; and a comparing unit, configured to compare, with the threshold, the normal transmit power of the AP acquired by the acquiring unit; and, when normal transmit power of at least one AP is higher than the threshold, determine that the long range BSS exists around the device; otherwise, determine that the long range BSS does not exist around the device.

In this embodiment, the threshold may be obtained from the Beacon frame broadcasted by the long range AP.

In an implementation manner of this embodiment, the transmission module 604 may be configured to: when the first NAV value is greater than 0, skip sending the data frame; when the first NAV value is 0 and the second NAV value is 0, send the Preamble sequence at the first power, and send the MAC frame at the second power; or when the first NAV value is 0, and the second NAV value is greater than 0, send the data frame at the second power.

Preferably, the transmission module 604 may be configured to: when the first NAV value is 0 and the second NAV value is 0, send the Preamble sequence by using the sum of the second power and a predetermined value, and send the MAC frame at the second power, where the predetermined value is greater than 0.

Preferably, the predetermined value may be a difference between the normal transmit power of the long range AP and the normal transmit power of the short range AP.

Preferably, the transmission module 604 may be further configured to use a bit in the signal field to indicate that the preamble sequence is sent at the first power.

In another implementation manner of this embodiment, the transmission module 604 may be further configured to: when the first NAV value is 0 and the second NAV value is greater than 0 and a time required for the second NAV value to decrease to 0 is less than a data transmission time of the device in the first BSS, after the second NAV value decreases to 0, send the Preamble sequence at the first power and send the MAC frame at the second power.

In still another implementation manner of this embodiment, the device further includes a clear channel assessment module 605, configured to perform physical carrier sense on a channel to obtain a status of the channel.

Accordingly, the transmission module 604 is configured to transmit data according to the status that is of the channel and obtained by the clear channel assessment module 605 and the NAV value that is set by the NAV setting module 602.

In still another implementation manner of this embodiment, the determining module 605 is further configured to determine whether the device is a device in the long range BSS or a device in the short range BSS.

In this embodiment of the present invention, by setting, according to a SIG field in a Preamble sequence, a NAV value used to indicate a transfer time of a MAC frame, the Preamble sequence is sent by a device in a second BSS by using first power, where the first power is higher than second power used for sending the MAC frame, so as to enable a device in a first BSS to obtain the transfer time of the MAC frame. When the first BSS is a short range BSS, the device in the second BSS sends the Preamble sequence at the first power, and sends the MAC frame at the second power, where the first power is higher than the second power; therefore, the device in the second BSS suppresses data transmission of the device in the first BSS (short range BSS) only when sending the Preamble sequence, and does not suppress data transmission of the device in the first BSS when sending the MAC frame, thereby avoiding a problem in the prior art that an increase in transmit power of an entire data frame results in suppression of concurrent data transmission of devices in two short range BSSs (the first BSS and the second BSS) that do not overlap.

## Embodiment 7

An embodiment of the present invention provides a data transmission device, where the device may be a computer or a server in a specific implementation manner, as shown in FIG. 12.

The device generally includes a transmitter 71, a receiver 72, a memory 73, a processor 74, and the like part. A person skilled in the art may understand that the structure shown in FIG. 12 does not constitute a limitation on the device; the device may include more or less parts than those shown in the figure, or combine some parts or different part arrangements.

The following introduces components of a computer 70 in detail with reference to FIG. 12.

The receiver 72 is configured to receive a data frame sent by a device in a second BSS.

The transmitter 71 is configured to transmit data under control of the processor 74.

The memory 73 may be configured to store a software program and an application module. By running the software program and the application module that are stored in the memory 73, the processor 74 executes various functional applications of the computer 70 and performs data processing. The memory 73 may mainly include a storage program area and a storage data area, where the storage program area may store an operating system, an application program required by at least one function, and the like, and the storage data area may store data (such as a NAV value) created according to processing performed by the computer 70, and the like. In addition, the memory 73 may include a high-speed RAM (Random Access Memory, random access memory), and may further include a non-volatile memory (non-volatile memory), for example, at least one disk storage component, a flash memory component, or another volatile solid state storage component.

A communications bus 75 is configured to implement connection and communication between the processor 74, the memory 73, the transmitter 71, and the receiver 72.

Specifically, by running or executing the software program and the application module that are stored in the memory 73, and by invoking data stored in the memory 73, the processor 74 may implement, when the data frame received by the receiver 72 includes a Preamble sequence but does not include a MAC frame, setting a NAV value according to a SIG field in the Preamble sequence.

Further, the processor 74 may be configured to: when the device is a device in a short range BSS, set a second NAV value according to the SIG field in the Preamble sequence.

Optionally, the processor 74 may be further configured to: if the received data frame includes a Preamble sequence and a MAC frame, set a first NAV value according to a Duration field in a frame header of the MAC frame when the MAC frame can be parsed; and set a first NAV value according to the SIG field in the Preamble sequence when the MAC frame cannot be parsed.

Specifically, when the device is a device in a short range BSS, the receiver 72 is further configured to receive a Beacon frame broadcasted by an AP and acquire normal transmit power of the AP from the Beacon frame.

Accordingly, the processor 74 may implement determining whether a long range BSS exists around the device.

Further, the transmitter 71 is configured to: when the long range BSS exists around the device, transmit data according to the NAV value under control of the processor 74; when the long range BSS does not exist around the device, send the data frame at the second power under control of the processor 74, where the second power may be normal transmit power of the device.

Specifically, when the device is the device in the long range BSS, that the transmitter 71 transmits data according to the NAV value under control of the processor 74 includes: when the NAV value is 0, sending the data frame at the second power; when the NAV value is greater than 0, skipping sending the data frame.

Specifically, when the device is the device in the short range BSS, that the transmitter 71 transmits data according to the NAV value under control of the processor 74 includes: when the first NAV value is greater than 0, skipping sending the data frame; when the first NAV value is 0 and the second NAV value is 0, sending the Preamble sequence at the first power, and sending the MAC frame at the second power, where the first power is higher than the second power; or when the first NAV value is 0, and the second NAV value is greater than 0, sending the data frame at the second power. The first power may be the sum of the second power and a predetermined value, where the predetermined value is greater than 0. For the device in the short range BSS, both the predetermined value and the threshold are obtained from the Beacon frame that is broadcasted by the long range AP and received by the receiver 72.

Further, when the device is the device in the short range BSS, that the transmitter 71 transmits data according to the NAV value under control of the processor 74 further includes: when the first NAV value is 0 and the second NAV value is greater than 0 and a time required for the second NAV value to decrease to 0 is less than a data transmission time of the device in the first BSS, after the second NAV value decreases to 0, sending the Preamble sequence at the first power and sending the MAC frame at the second power.

Preferably, the receiver 72 may be further configured to perform physical carrier sense on a channel to obtain a status of the channel.

Accordingly, the transmitter 71 may be configured to transmit data according to the status of the channel and the NAV value under control of the processor 74.

Preferably, the receiver 72 may be configured to receive the threshold carried in the Beacon frame that is broadcasted by the long range AP.

Accordingly, the processor 74 may implement determining whether the device is the device in the long range BSS or the device in the short range BSS.

Further, the processor 74 may implement: when normal transmit power of the device is higher than the threshold, determining that the device is the device in the long range BSS; or when normal transmit power of the device is lower than the threshold, determining that the device is the device in the short range BSS.

In this embodiment of the present invention, by setting, according to a SIG field in a Preamble sequence, a NAV value used to indicate a transfer time of a MAC frame, the Preamble sequence is sent by a device in a second BSS by using first power, where the first power is higher than second power used for sending the MAC frame, so as to enable a device in a first BSS to obtain the transfer time of the MAC frame. When the first BSS is a long range BSS, the device in the first BSS (long range BSS) may receive the Preamble sequence sent by the device in the second BSS (short range BSS), so as to obtain a data transmission time of the device in the second BSS and set the NAV value according to the data transmission time; therefore, when data is transmitted according to the NAV value, no interference is caused to data transmission of the device in the second BSS, and further, the data transmission of the device in the second BSS does not fail. When the first BSS is a short range BSS, the device in the second BSS sends the Preamble sequence at the first power, and sends the MAC frame at the second power, where the first power is higher than the second power; therefore, the device in the second BSS suppresses data transmission of the device in the first BSS (short range BSS) only when sending the Preamble sequence, and does not suppress data transmission of the device in the first BSS when sending the MAC frame, thereby avoiding a problem in the prior art that an increase in transmit power of an entire data frame results in suppression of concurrent data transmission of devices in two short range BSSs (the first BSS and the second BSS) that do not overlap.

It should be noted that, when the data transmission device provided in the foregoing embodiments is transmitting data, description is performed only by using the division of the foregoing functional modules as an example. In actual application, the foregoing functions can be allocated to different modules and implemented according to a requirement, that is, an inner structure of a device is divided into different function modules to implement all or some of the functions described above. In addition, the data transmission method embodiments provided in the foregoing embodiments pertain to a same concept. For a specific implementation process, reference may be made to the method embodiments, and details are not described herein again.

The sequence numbers of the foregoing embodiments of the present invention are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from principle of the present invention shall fall within the protection scope of the present invention.

**Claims**

1. A data transmission method, wherein the method comprises:

   receiving (301), by a device in a first basic service set, a data frame sent by a device in a second basic service set, wherein the data frame sent by the device in the second basic service set comprises a preamble sequence and a Medium Access Control frame; transmit power of the preamble sequence is first power; transmit power of the Medium Access Control frame is second power; and the first power is higher than the second power;
   if the data frame received by the device in the first basic service set comprises the preamble sequence but does not comprise the Medium Access Control frame (302), setting a network allocation vector value according to a signal field in the preamble sequence; and
   transmitting data according to the network allocation vector value,
   characterized that when normal transmit power of an access point in the first basic service set is lower than a threshold, the network allocation vector value comprises a first network allocation vector value and a second network allocation vector value, and the method further comprises:

   if the data frame received by the device in the first basic service set comprises the preamble sequence and the Medium Access Control frame, setting the first network allocation vector value according to a duration field in a frame header of the Medium Access Control frame (303); and
the setting a network allocation vector value according to a signal field in the preamble sequence comprises:
setting the second network allocation vector value according to the signal field in the preamble sequence.

2. The method according to claim 1, wherein the setting a network allocation vector value according to a signal field in the preamble sequence comprises:

   obtaining, from the signal field, a frame length and a transmission rate of the Medium Access Control frame;
   calculating a transfer time of the Medium Access Control frame according to the frame length and the transmission rate of the Medium Access Control frame; and
   setting the network allocation vector value according to the transfer time of the Medium Access Control frame.

3. The method according to claim 2, wherein the calculating a transfer time of the Medium Access Control frame according to the frame length and the transmission rate of the Medium Access Control frame comprises:

   determining a response frame of the Medium Access Control frame according to an acknowledgement indication field in the signal field; and
   if the response frame of the Medium Access Control frame is an acknowledgement frame, calculating the transfer time according to the following formula:

$$T = T_{PSDU} + T_{SIFS} + T_{ACK};$$

   or
   if the response frame of the Medium Access Control frame is a block acknowledgement frame, calculating the transfer time according to the following formula:

$$T = T_{PSDU} + 2 \times T_{SIFS} + T_{BAR+BA};$$

   or
   if there is no acknowledgement response for the Medium Access Control frame, calculating the transfer time according to the following formula:

$$T=T_{PSDU};$$

or

if the response frame of the Medium Access Control frame is a frame other than the acknowledgement frame, a Clear To Send frame, and the block acknowledgement frame, calculating the transfer time according to the following formula:

$$T=T_{PSDU}+T_{SIFS}+T_{MAX\_PSDU};$$

wherein

$T_{PSDU}$ is an actual transfer time of the Medium Access Control frame; $T_{SIFS}$ is a short interframe space; $T_{ACK}$ is a transfer time of the acknowledgement frame; $T_{BAR+BA}$ is a transfer time of a block acknowledgement request frame and the block acknowledgement frame; and $T_{MAX\_PSDU}$ is a time for transmitting a maximum allowed Medium Access Control frame.

4. The method according to any one of claims 1 to 3, wherein when the data frame received by the device in the first basic service set comprises the preamble sequence and the Medium Access Control frame, before the setting the first network allocation vector value according to a duration field in a frame header of the Medium Access Control frame, the method further comprises:

if the Medium Access Control frame can be parsed, setting the first network allocation vector value according to the duration field in the frame header of the Medium Access Control frame; and
if the Medium Access Control frame cannot be parsed, setting the first network allocation vector value according to the signal field in the preamble sequence.

5. The method according to any one of claims 1 to 4, wherein the transmitting data according to the network allocation vector value comprises:

if the first network allocation vector value is greater than 0, skipping sending the data frame; and
if the first network allocation vector value is 0 and the second network allocation vector value is 0, sending the preamble sequence at the first power and sending the Medium Access Control frame at the second power.

6. A data transmission device configured to be comprised in a first basic service set, wherein the device comprises:

a receiving module, configured to receive a data frame sent by a device in a second basic service set, wherein the data frame sent by the device in the second basic service set comprises a preamble sequence and a Medium Access Control frame; transmit power of the preamble sequence is first power; transmit power of the Medium Access Control frame is second power; and the first power is higher than the second power;
a network allocation vector setting module, configured to: when the data frame received by the receiving module comprises the preamble sequence but does not comprise the Medium Access Control frame, set a network allocation vector value according to a signal field in the preamble sequence; and
a transmission module, configured to transmit data according to the network allocation vector value that is set by the network allocation vector setting module,
**characterized in that**, when normal transmit power of an access point in the first basic service set is lower than a threshold, the network allocation vector value comprises a first network allocation vector value and a second network allocation vector value,
wherein the network allocation vector setting module is further configured to:

when normal transmit power of an access point in the first basic service set is lower than the threshold, and the data frame received by the receiving module comprises the preamble sequence and the Medium Access Control frame, set the first network allocation vector value according to a duration field in a frame header of the Medium Access Control frame; and
when normal transmit power of an access point in the first basic service set is lower than the threshold, and the received data frame comprises the preamble sequence but does not comprise the Medium Access Control frame, set the second network allocation vector value according to the signal field in the preamble sequence.

7. The device according to claim 6, wherein the network allocation vector setting module comprises:

an obtaining unit, configured to obtain a frame length and a transmission rate of the Medium Access Control frame from the signal field;
a calculating unit, configured to calculate a transfer time of the Medium Access Control frame according to the frame length and the transmission rate of the Medium Access Control frame obtained by the obtaining unit; and

a setting unit, configured to set the network allocation vector value according to the transfer time of the Medium Access Control frame obtained by the calculating unit.

8. The device according to claim 7, wherein the calculating unit is configured to:

determine a response frame of the Medium Access Control frame according to an acknowledgement indication field in the signal field; and when the response frame of the Medium Access Control frame is an acknowledgement frame, calculate the transfer time according to the following formula:

$$T = T_{PSDU} + T_{SIFS} + T_{ACK};$$

or

when the response frame of the Medium Access Control frame is a block acknowledgement frame, calculate the transfer time according to the following formula:

$$T = T_{PSDU} + 2 \times T_{SIFS} + T_{BAR+BA};$$

or

when there is no acknowledgement response for the Medium Access Control frame, calculate the transfer time according to the following formula:

$$T = T_{PSDU};$$

or

when the response frame of the Medium Access Control frame is a frame other than the acknowledgement frame, a Clear To Send frame, and the block acknowledgement frame, calculate the transfer time according to the following formula:

$$T = T_{PSDU} + T_{SIFS} + T_{MAX\_PSDU};$$

wherein
$T_{PSDU}$ is an actual transfer time of the Medium Access Control frame; $T_{SIFS}$ is a short interframe space; $T_{ACK}$ is a transfer time of the acknowledgement frame; $T_{BAR+BA}$ is a transfer time of a block acknowledgement request frame and the block acknowledgement frame; and $T_{MAX\_PSDU}$ is a time for transmitting a maximum allowed Medium Access Control frame.

9. The device according to any one of claims 6 to 8, wherein the network allocation vector setting module is further configured to:

when the data frame received by the receiving module comprises the preamble sequence and the Medium Access Control frame, before the setting the first network allocation vector value according to a duration field in a frame header of the Medium Access Control frame, when the Medium Access Control frame can be parsed, set the first network allocation vector value according to the duration field in the frame header of the Medium Access Control frame; or when the Medium Access Control frame cannot be parsed, set the first network allocation vector value according to the signal field in the preamble sequence.

10. The device according to claim 6 or 9, wherein the transmission module is configured to:

when the first network allocation vector value is greater than 0, skip sending the data frame; or when the first network allocation vector value is 0 and the second network allocation vector value is 0, send the preamble sequence at the first power and send the Medium Access Control frame at the second power.

11. The device according to claim 10, wherein the transmission module is configured to:
when the first network allocation vector value is 0 and the second network allocation vector value is 0, send the preamble sequence by using the sum of the second power and a predetermined value, and send the Medium Access Control frame at the second power, wherein the predetermined value is greater than 0.

**Patentansprüche**

1. Verfahren zur Datenübertragung, wobei das Verfahren umfasst:

Empfangen (301), durch eine Vorrichtung in einem ersten "Basic Service Set", eines Datenrahmens, der von einer Vorrichtung in einem zweiten "Basic Service Set" gesendet wird, wobei der Datenrahmen, der von der Vorrichtung in dem zweiten "Basic Service Set" gesendet wird, eine Präambelsequenz und einen "Medium Access Control" Rahmen umfasst; die Sendeleistung der Präambelsequenz eine erste Leistung ist; die Sendeleistung des "Medium Access Control" Rahmens eine zweite Leistung ist; und die erste Leistung höher als die zweite Leistung ist;

falls der Datenrahmen, der durch die Vorrichtung in dem ersten "Basic Service Set" empfangen wird, die Präambelsequenz umfasst, jedoch nicht den "Medium Access Control" Rahmen umfasst (302), Einstellen eines Netzzuweisungsvektor-Wertes gemäß einem Signalfeld in der Präambelsequenz; und

Übertragen von Daten gemäß dem Netzzuweisungsvektor-Wert,

**dadurch gekennzeichnet, dass**,

wenn die normale Sendeleistung eines Zugangspunktes in dem ersten "Basic Service Set" niedriger als ein Schwellenwert ist, der Netzzuweisungsvektor-Wert einen ersten Netzzuweisungsvektor-Wert und einen zweiten Netzzuweisungsvektor-Wert umfasst, und das Verfahren ferner umfasst:

falls der Datenrahmen, der durch die Vorrichtung in dem ersten "Basic Service Set" empfangen wird, die Präambelsequenz und den "Medium Access Control" Rahmen umfasst, Einstellen des ersten Netzzuweisungsvektor-Wertes gemäß einem Dauer-Feld in einem Rahmen-"Header" des "Medium Access Control" Rahmens (303); und das Einstellen eines Netzzuweisungsvektor-Wertes gemäß einem Signalfeld in der Präambelsequenz umfasst:

Einstellen des zweiten Netzzuweisungsvektor-Wertes gemäß dem Signalfeld in der Präambelsequenz.

2. Verfahren nach Anspruch 1, wobei das Einstellen eines Netzzuweisungsvektor-Wertes gemäß einem Signalfeld in der Präambelsequenz umfasst:

Gewinnen, aus dem Signalfeld, einer Rahmenlänge und einer Übertragungsgeschwindigkeit des "Medium Access Control" Rahmens;
Berechnen einer Übertragungszeit des "Medium Access Control" Rahmens gemäß der Rahmenlänge und der Übertragungsgeschwindigkeit des "Medium Access Control" Rahmens; und
Einstellen des Netzzuweisungsvektor-Wertes gemäß der Übertragungszeit des "Medium Access Control" Rahmens.

3. Verfahren nach Anspruch 2, wobei das Berechnen einer Übertragungszeit des "Medium Access Control" Rahmens gemäß der Rahmenlänge und der Übertragungsgeschwindigkeit des "Medium Access Control" Rahmens umfasst:

Bestimmen eines Antwortrahmens des "Medium Access Control" Rahmens gemäß einem Bestätigungsanzeigefeld in dem Signalfeld; und falls der Antwortrahmen des "Medium Access Control" Rahmens ein Bestätigungsrahmen ist, Berechnen der Übertragungszeit gemäß der folgenden Formel:

$$T = T_{PSDU} + T_{SIFS} + T_{ACK};$$

oder
falls der Antwortrahmen des "Medium Access Control" Rahmens ein Blockbestätigungsrahmen ist, Berechnen der Übertragungszeit gemäß der folgenden Formel:

$$T = T_{PSDU} + 2 \times T_{SIFS} + T_{BAR+BA};$$

oder
falls keine Bestätigungsantwort für den "Medium Access Control" Rahmen vorhanden ist, Berechnen der Übertragungszeit gemäß der folgenden Formel:

$$T = T_{PSDU};$$

oder
falls der Antwortrahmen des "Medium Access Control" Rahmens ein anderer Rahmen als der Bestätigungsrahmen, ein "Clear To Send" Rahmen und der Blockbestätigungsrahmen ist, Berechnen der Übertragungszeit gemäß der folgenden Formel:

$$T = T_{PSDU} + T_{SIFS} + T_{MAX\_PSDU};$$

wobei

$T_{PSDU}$ eine tatsächliche Übertragungszeit des "Medium Access Control" Rahmens ist; $T_{SIFS}$ ein kurzer Zwischenrahmenraum ist; $T_{ACK}$ eine Übertragungszeit des Bestätigungsrahmens ist; $T_{BAR+BA}$ eine Übertragungszeit eines Blockbestätigungsanforderungs-Rahmens und des Blockbestätigungsrahmens ist; und $T_{MAX\_PSDU}$ eine Zeit für die Übertragung eines maximal zulässigen "Medium Access Control" Rahmens ist.

4. Verfahren nach einem der Ansprüche 1 bis 3, wobei, wenn der Datenrahmen, der durch die Vorrichtung in dem ersten "Basic Service Set" empfangen wird, die Präambelsequenz und den "Medium Access Control" Rahmen umfasst, das Verfahren vor dem Einstellen des ersten Netzzuweisungsvektor-Wertes gemäß einem Dauer-Feld in einem Rahmen-"Header" des "Medium Access Control" Rahmens ferner umfasst:

falls der "Medium Access Control" Rahmen geparst werden kann, Einstellen des ersten Netzzuweisungsvektor-Wertes gemäß dem Dauer-Feld in dem Rahmen-"Header" des "Medium Access Control" Rahmens; und

falls der "Medium Access Control" Rahmen nicht geparst werden kann, Einstellen des ersten Netzzuweisungsvektor-Wertes gemäß dem Signalfeld in der Präambelsequenz.

5. Verfahren nach einem der Ansprüche 1 bis 4, wobei das Übertragen von Daten gemäß dem Netzzuweisungsvektor-Wert umfasst:

falls der erste Netzzuweisungsvektor-Wert größer als 0 ist, Überspringen des Sendens des Datenrahmens; und

falls der erste Netzzuweisungsvektor-Wert 0 ist und der zweite Netzzuweisungsvektor-Wert 0 ist, Senden der Präambelsequenz mit der ersten Leistung und Senden des "Medium Access Control" Rahmens mit der zweiten Leistung.

6. Vorrichtung zur Datenübertragung, die dafür ausgelegt ist, in einem ersten "Basic Service Set" enthalten zu sein, wobei die Vorrichtung umfasst:

ein Empfangsmodul, das dafür ausgelegt ist, einen Datenrahmen zu empfangen, der von einer Vorrichtung in einem zweiten "Basic Service Set" gesendet wird, wobei der Datenrahmen, der von der Vorrichtung in dem zweiten "Basic Service Set" gesendet wird, eine Präambelsequenz und einen "Medium Access Control" Rahmen umfasst; die Sendeleistung der Präambelsequenz eine erste Leistung ist; die Sendeleistung des "Medium Access Control" Rahmens eine zweite Leistung ist; und die erste Leistung höher als die zweite Leistung ist;

ein Netzzuweisungsvektor-Einstellmodul, das dafür ausgelegt ist: wenn der Datenrahmen, der durch das Empfangsmodul empfangen wird, die Präambelsequenz umfasst, jedoch nicht den "Medium Access Control" Rahmen umfasst, einen Netzzuweisungsvektor-Wert gemäß einem Signalfeld in der Präambelsequenz einzustellen; und

ein Übertragungsmodul, das dafür ausgelegt ist, Daten gemäß dem Netzzuweisungsvektor-Wert zu übertragen, welcher von dem Netzzuweisungsvektor-Einstellmodul eingestellt wurde,

**dadurch gekennzeichnet, dass**, wenn die normale Sendeleistung eines Zugangspunktes in dem ersten "Basic Service Set" niedriger als ein Schwellenwert ist, der Netzzuweisungsvektor-Wert einen ersten Netzzuweisungsvektor-Wert und einen zweiten Netzzuweisungsvektor-Wert umfasst,

wobei das Netzzuweisungsvektor-Einstellmodul ferner dafür ausgelegt ist:

wenn die normale Sendeleistung eines Zugangspunktes in dem ersten "Basic Service Set" niedriger als der Schwellenwert ist und der Datenrahmen, der durch das Empfangsmodul empfangen wird, die Präambelsequenz und den "Medium Access Control" Rahmen umfasst, den ersten Netzzuweisungsvektor-Wert gemäß einem Dauer-Feld in einem Rahmen-"Header" des "Medium Access Control" Rahmens einzustellen; und

wenn die normale Sendeleistung eines Zugangspunktes in dem ersten "Basic Service Set" niedriger als der Schwellenwert ist und der empfangene Datenrahmen die Präambelsequenz umfasst, jedoch nicht den "Medium Access Control" Rahmen umfasst, den zweiten Netzzuweisungsvektor-Wert gemäß dem Signalfeld in der Präambelsequenz einzustellen.

7. Vorrichtung nach Anspruch 6, wobei das Netzzuweisungsvektor-Einstellmodul umfasst:

eine Gewinnungseinheit, die dafür ausgelegt ist, eine Rahmenlänge und eine Übertragungsgeschwindigkeit des "Medium Access Control" Rahmens aus dem Signalfeld zu gewinnen;

eine Berechnungseinheit, die dafür ausgelegt ist, eine Übertragungszeit des "Medium Access Control" Rahmens gemäß der Rahmenlänge und der Übertragungsgeschwindigkeit des "Medium Access Control" Rahmens, die durch die Gewinnungseinheit gewonnen wurden, zu berechnen; und

eine Einstelleinheit, die dafür ausgelegt ist, den Netzzuweisungsvektor-Wert gemäß der Übertragungszeit des "Medium Access Control" Rahmens, die durch die Berechnungseinheit gewonnen wurde, einzustellen.

8. Vorrichtung nach Anspruch 7, wobei die Berechnungseinheit dafür ausgelegt ist:

einen Antwortrahmen des "Medium Access Control" Rahmens gemäß einem Bestätigungsanzeigefeld in dem Signalfeld zu bestimmen; und

wenn der Antwortrahmen des "Medium Access Control" Rahmens ein Bestätigungsrahmen ist, die Übertragungszeit gemäß der folgenden Formel zu berechnen:

$$T = T_{PSDU} + T_{SIFS} + T_{ACK};$$

oder
wenn der Antwortrahmen des "Medium Access Control" Rahmens ein Blockbestätigungsrahmen ist, die Übertragungszeit gemäß der folgenden Formel zu berechnen:

$$T = T_{PSDU} + 2 \times T_{SIFS} + T_{BAR+BA};$$

oder
wenn keine Bestätigungsantwort für den "Medium Access Control" Rahmen vorhanden ist, die Übertragungszeit gemäß der folgenden Formel zu berechnen:

$$T = T_{PSDU};$$

oder
wenn der Antwortrahmen des "Medium Access Control" Rahmens ein anderer Rahmen als der Bestätigungsrahmen, ein "Clear To Send" Rahmen und der Blockbestätigungsrahmen ist, die Übertragungszeit gemäß der folgenden Formel zu berechnen:

$$T = T_{PSDU} + T_{SIFS} + T_{MAX\_PSDU};$$

wobei

$T_{PSDU}$ eine tatsächliche Übertragungszeit des "Medium Access Control" Rahmens ist; $T_{SIFS}$ ein kurzer Zwischenrahmenraum ist; $T_{ACK}$ eine Übertragungszeit des Bestätigungsrahmens ist; $T_{BAR+BA}$ eine Übertragungszeit eines Blockbestätigungsanforderungs-Rahmens und des Blockbestätigungsrahmens ist; und $T_{MAX\_PSDU}$ eine Zeit für die Übertragung eines maximal zulässigen "Medium Access Control" Rahmens ist.

9. Vorrichtung nach einem der Ansprüche 6 bis 8, wobei das Netzzuweisungsvektor-Einstellmodul ferner dafür ausgelegt ist:

wenn der Datenrahmen, der durch das Empfangsmodul empfangen wird, die Präambelsequenz und den "Medium Access Control" Rahmen umfasst, vor dem Einstellen des ersten Netzzuweisungsvektor-Wertes gemäß einem Dauer-Feld in einem Rahmen-"Header" des "Medium Access Control" Rahmens,
wenn der "Medium Access Control" Rahmen geparst werden kann, den ersten Netzzuweisungsvektor-Wert gemäß dem Dauer-Feld in dem Rahmen-"Header" des "Medium Access Control" Rahmens einzustellen; oder
wenn der "Medium Access Control" Rahmen nicht geparst werden kann, den ersten Netzzuweisungsvektor-Wert gemäß dem Signalfeld in der Präambelsequenz einzustellen.

10. Vorrichtung nach Anspruch 6 oder 9, wobei das Übertragungsmodul dafür ausgelegt ist:

wenn der erste Netzzuweisungsvektor-Wert größer als 0 ist, das Senden des Datenrahmens zu überspringen; oder
wenn der erste Netzzuweisungsvektor-Wert 0 ist und der zweite Netzzuweisungsvektor-Wert 0 ist, die Präambelsequenz mit der ersten Leistung zu senden und den "Medium Access Control" Rahmen mit der zweiten Leistung zu senden.

11. Vorrichtung nach Anspruch 10, wobei das Übertragungsmodul dafür ausgelegt ist:
wenn der erste Netzzuweisungsvektor-Wert 0 ist und der zweite Netzzuweisungsvektor-Wert 0 ist, die Präambelsequenz unter Verwendung der Summe der zweiten Leistung und eines vorbestimmten Wertes zu senden und den "Medium Access Control" Rahmen mit der zweiten Leistung zu senden, wobei der vorbestimmte Wert größer als 0 ist.

**Revendications**

1. Procédé de transmission de données, dans lequel le procédé consiste :

à recevoir (301), au moyen d'un dispositif dans un premier ensemble de services de base, une trame de données envoyée par un dispositif dans un second ensemble de services de base, dans lequel la trame de données envoyée par le dispositif dans le second ensemble de services de base comprend une séquence de préambules et une trame de contrôle d'accès au support ; une puissance de transmission de la séquence de préambules est une première puissance, une puissance de transmission de la trame de contrôle d'accès au support est une seconde puissance, et la première puissance est supérieure à la seconde puissance ;

si la trame de données reçue par le dispositif dans le premier ensemble de services de base comprend la séquence de préambules mais ne comprend pas la trame de contrôle d'accès au support (302), à fixer une valeur de vecteur d'attribution de réseau en fonction d'un champ de signal dans la séquence de préambules ; et à transmettre des données en fonction de la valeur de vecteur d'attribution de réseau, **caractérisé en ce que**

lorsque la puissance de transmission normale d'un point d'accès dans le premier ensemble de services de base est inférieure à un seuil, la valeur de vecteur d'attribution de réseau comprend une première valeur de vecteur d'attribution de réseau et une seconde valeur de vecteur d'attribution de réseau et le procédé consiste en outre :

si la trame de données reçue par le dispositif dans le premier ensemble de services de base comprend la séquence de préambules et la trame de contrôle d'accès au support, à fixer la première valeur de vecteur d'attribution de réseau en fonction d'un champ de durée dans un en-tête de trame de la trame de contrôle d'accès au réseau (303) ; et la fixation d'une valeur de vecteur d'attribution de réseau en fonction d'un champ de signal dans la séquence de préambules consiste : à fixer la seconde valeur de vecteur d'attribution de réseau en fonction du champ de signal dans la séquence de préambules.

2. Procédé selon la revendication 1, dans lequel la fixation d'une valeur de vecteur d'attribution de réseau en fonction d'un champ de signal dans la séquence de préambules consiste :

à obtenir, du champ de signal, une longueur de trame et une vitesse de transmission de la trame de contrôle d'accès au support ; à calculer un temps de transfert de la trame de contrôle d'accès au support en fonction de la longueur de trame et de la vitesse de transmission de la trame de contrôle d'accès au support ; et à fixer la valeur de vecteur d'attribution de réseau en fonction du temps de transfert de la trame de contrôle d'accès au support.

3. Procédé selon la revendication 2, dans lequel le calcul d'un temps de transfert de la trame de contrôle d'accès au support en fonction de la longueur de trame et de la vitesse de transmission de la trame de contrôle d'accès au support consiste :

à déterminer une trame de réponse de la trame de contrôle d'accès au support en fonction d'un champ d'indication d'accusé de réception dans le champ de signal ; et si la trame de réponse de la trame de contrôle d'accès au support est une trame d'accusé de réception, à calculer le temps de transfert en fonction de la formule suivante :

$$T = T_{PSDU} + T_{SIFS} + T_{ACK} \text{ ;}$$

ou
si la trame de réponse de la trame de contrôle d'accès au support est une trame d'accusé de réception de bloc, à calculer le temps de transfert en fonction de la formule suivante :

$$T = T_{PSDU} + 2 \text{ x } T_{SIFS} + T_{BAR+BA} \text{ ;}$$

ou
s'il n'y a pas de réponse d'accusé de réception pour la trame de contrôle d'accès au support, à calculer le temps de transfert en fonction de la formule suivante :

$$T = T_{PSDU} \text{ ;}$$

ou
si la trame de réponse de la trame de contrôle d'accès au support est une trame autre que la trame d'accusé de réception, une trame prête à envoyer, et la trame d'accusé de réception de bloc, à calculer le temps de transfert en fonction de la formule suivante :

$$T = T_{PSDU} + T_{SIFS} + T_{MAX\_PSDU} \text{ ;}$$

dans lequel

$T_{PSDU}$ est un temps de transfert actuel de la trame de contrôle d'accès au support ; $T_{SIFS}$ est un court espace inter-trame ; $T_{ACK}$ est un temps de transfert de la trame d'accusé de réception ; $T_{BAR+BA}$ est un temps de transfert d'une trame de demande d'accusé de réception de bloc et de la trame d'accusé de réception de bloc ; et $T_{MAX\_PSDU}$ est un temps pour transmettre une trame de contrôle d'accès au support admissible maximale.

4. Procédé selon l'une quelconque des revendications 1 à 3, dans lequel, lorsque la trame de données reçue par le dispositif dans le premier ensemble de services de base comprend la séquence de préambules et la trame de contrôle d'accès au support, avant la fixation de la première valeur de vecteur d'attribution de réseau en fonction d'un champ de durée dans un en-tête de trame de la trame de contrôle d'accès au support, le procédé consiste en outre :

> si la trame de contrôle d'accès au support peut être analysée, à fixer la première valeur de vecteur d'attribution de réseau en fonction du champ de durée dans l'en-tête de trame de la trame de contrôle d'accès au support ; et
> si la trame de contrôle d'accès au support ne peut pas être analysée, à fixer la première valeur de vecteur d'attribution de réseau en fonction du champ de signal dans la séquence de préambules.

5.　Procédé selon l'une quelconque des revendications 1 à 4, dans lequel la transmission de données en fonction de la valeur de vecteur d'attribution de réseau consiste :

> si la première valeur de vecteur d'attribution de réseau est supérieure à 0, à sauter l'envoi de la trame de données ; et
> si la première valeur de vecteur d'attribution de réseau est 0 et si la seconde valeur de vecteur d'attribution de réseau est 0, à envoyer la séquence de préambules à la première puissance et à envoyer la trame de contrôle d'accès au support à la seconde puissance.

6.　Dispositif de transmission de données configuré pour être inclus dans un premier ensemble de services de base, dans lequel le dispositif comprend :

> un module de réception, configuré pour recevoir une trame de données envoyée par un dispositif dans un second ensemble de services de base, dans lequel la trame de données envoyée par le dispositif dans le second ensemble de services de base comprend une séquence de préambules et une trame de contrôle d'accès au support ; une puissance de transmission de la séquence de préambules est une première puissance, une puissance de transmission de la trame de contrôle d'accès au support est une seconde puissance, et la première puissance est supérieure à la seconde puissance ;
> un module de détermination de vecteur d'attribution de réseau, configuré : lorsque la trame de données reçue par le module de réception comprend la séquence de préambules mais ne comprend pas la trame de contrôle d'accès au support, pour fixer une valeur de vecteur d'attribution de réseau en fonction d'un champ de signal dans la séquence de préambules ; et
un module de transmission, configuré pour transmettre des données en fonction de la valeur de vecteur d'attribution de réseau qui est fixée par le module de détermination de vecteur d'attribution de réseau,
**caractérisé en ce que**, lorsque la puissance de transmission normale d'un point d'accès dans le premier ensemble de services de base est inférieure à un seuil, la valeur de vecteur d'attribution de réseau comprend une première valeur de vecteur d'attribution de réseau et une seconde valeur de vecteur d'attribution de réseau, dans lequel le module de détermination de vecteur d'attribution de réseau est en outre configuré :

> lorsque la puissance de transmission normale d'un point d'accès dans le premier ensemble de services de base est inférieure au seuil et que la trame de données reçue par le module de réception comprend la séquence de préambules et la trame de contrôle d'accès au support, pour fixer la première valeur de vecteur d'attribution de réseau en fonction d'un champ de durée dans un en-tête de trame de la trame de contrôle d'accès au réseau ; et
> lorsque la puissance de transmission normale d'un point d'accès dans le premier ensemble de services de base est inférieure au seuil et que la trame de données reçue comprend la séquence de préambules mais ne comprend pas la trame de contrôle d'accès au support, pour fixer la seconde valeur de vecteur d'attribution de réseau en fonction du champ de signal dans la séquence de préambules.

7.　Dispositif selon la revendication 6, dans lequel le module de détermination de vecteur d'attribution de réseau comprend :

> une unité d'obtention, configurée pour obtenir une longueur de trame et une vitesse de transmission de la trame de contrôle d'accès au support à partir du champ de signal ;
> une unité de calcul, configurée pour calculer un temps de transfert de la trame de contrôle d'accès au support en fonction de la longueur de trame et de la vitesse de transmission de la trame de contrôle d'accès au support obtenues par l'unité d'obtention ; et
> une unité de fixation, configurée pour fixer la valeur de vecteur d'attribution de réseau en fonction du temps de transfert de la trame de contrôle d'accès au support obtenu par l'unité de calcul.

8. Dispositif selon la revendication 7, dans lequel l'unité de calcul est configurée :

pour déterminer une trame de réponse de la trame de contrôle d'accès au support en fonction d'un champ d'indication d'accusé de réception dans le champ de signal ; et
lorsque la trame de réponse de la trame de contrôle d'accès au support est une trame d'accusé de réception, pour calculer le temps de transfert en fonction de la formule suivante :

$$T = T_{PSDU} + T_{SIFS} + T_{ACK} \ ;$$

ou
lorsque la trame de réponse de la trame de contrôle d'accès au support est une trame d'accusé de réception de bloc, pour calculer le temps de transfert en fonction de la formule suivante :

$$T = T_{PSDU} + 2 \ x \ T_{SIFS} + T_{BAR+BA} \ ;$$

ou
lorsqu'il n'y a pas de réponse d'accusé de réception pour la trame de contrôle d'accès au support, pour calculer le temps de transfert en fonction de la formule suivante :

$$T = T_{PSDU} \ ;$$

ou
lorsque la trame de réponse de la trame de contrôle d'accès au support est une trame autre que la trame d'accusé de réception, une trame prête à envoyer, et la trame d'accusé de réception de bloc, pour calculer le temps de transfert en fonction de la formule suivante :

$$T = T_{PSDU} + T_{SIFS} + T_{MAX\_PSDU} \ ;$$

dans lequel

$T_{PSDU}$ est un temps de transfert actuel de la trame de contrôle d'accès au support ;
$T_{SIFS}$ est un court espace inter-trame ; $T_{ACK}$ est un temps de transfert de la trame d'accusé de réception ;
$T_{BAR+BA}$ est un temps de transfert d'une trame de demande d'accusé de réception de bloc et de la trame d'accusé de réception de bloc ; et $T_{MAX\_PSDU}$ est un temps pour transmettre une trame de contrôle d'accès au support admissible maximale.

9. Dispositif selon l'une quelconque des revendications 6 à 8, dans lequel le module de détermination de vecteur d'attribution de réseau est en outre configuré :

lorsque la trame de données reçue par le module de réception comprend la séquence de préambules et la trame de contrôle d'accès au support, avant la fixation de la première valeur de vecteur d'attribution de réseau en fonction d'un champ de durée dans un en-tête de trame de la trame de contrôle d'accès au support, lorsque la trame de contrôle d'accès au support peut être analysée, pour fixer la première valeur de vecteur d'attribution de réseau en fonction du champ de durée dans l'en-tête de trame de la trame de contrôle d'accès au support ; ou lorsque la trame de contrôle d'accès au support ne peut pas être analysée, pour fixer la première valeur de vecteur d'attribution de réseau en fonction du champ de signal dans la séquence de préambules.

10. Dispositif selon la revendication 6 ou 9, dans lequel le module de transmission est configuré :

lorsque la première valeur de vecteur d'attribution de réseau est supérieure à 0, pour sauter l'envoi de la trame de données ; et
lorsque la première valeur de vecteur d'attribution de réseau est 0 et que la seconde valeur de vecteur d'attribution de réseau est 0, pour envoyer la séquence de préambules à la première puissance et pour envoyer la trame de contrôle d'accès au support à la seconde puissance.

11. Dispositif selon la revendication 10, dans lequel le module de transmission est configuré :
lorsque la première valeur de vecteur d'attribution de réseau est 0 et que la seconde valeur de vecteur d'attribution de réseau est 0, pour envoyer la séquence de préambules en utilisant la somme de la seconde puissance et d'une valeur prédéterminée, et pour envoyer la trame de contrôle d'accès au support à la seconde puissance, dans lequel la valeur prédéterminée est supérieure à 0.

FIG. 1

**101**

A device in a first BSS receives a data frame sent by a device in a second BSS, where the data frame sent by the device in the second BSS includes a Preamble sequence and a MAC frame; transmit power of the Preamble sequence is first power; transmit power of the MAC frame is second power; and the first power is higher than the second power

**102**

If the data frame received by the device in the first BSS includes the Preamble sequence but does not include the MAC frame, set a NAV value according to a SIG field in the Preamble sequence

**103**

Transmit data according to the NAV value

FIG. 2

200

Determine whether a device in a first BSS is a device in a long range BSS or a device in a short range BSS (a result of the determining is that the device in the first BSS is a device in a long range BSS)

201

The device in the first BSS receives a data frame sent by a device in a second BSS, where the data frame sent by the device in the second BSS includes a Preamble sequence and a MAC frame; transmit power of the Preamble sequence is first power; transmit power of the MAC frame is second power; and the first power is higher than the second power

202

If the data frame received by the device in the first BSS includes the Preamble sequence but does not include the MAC frame, set a NAV value according to a SIG field in the Preamble sequence

203

If the data frame received by the device in the first BSS includes the Preamble sequence and the MAC frame, set a NAV value according to a Duration field in a frame header of the MAC frame when the MAC frame can be parsed

204

If the received data frame includes the Preamble sequence and the MAC frame, set a NAV value according to a SIG field in the Preamble sequence when the MAC frame cannot be parsed

206

Transmit data according to the NAV value

FIG. 3

| L-STF | L-LTF | L-SIG | HT-SIG | HT-STF | HT-LTF | DATA | SIG EXT |
|-------|-------|-------|--------|--------|--------|------|---------|

◄──────── Preamble ────────►◄──────── PSDU ────────►

FIG. 4

Rate                Length

R

**FIG. 5**

R            Length        ACK
                           Indication

MCS                        R

**FIG. 6**

R                                      Coding-I

R        Length        R

ACK
Indication

**FIG. 7**

300

Determine whether a device in a first BSS is a device in a
long range BSS or a device in a short range BSS (a result of
the determining is that the device in the first BSS is a device
in a short range BSS)

301

The device in the first BSS receives a data frame sent by a
device in a second BSS, where the data frame sent by the
device in the second BSS includes a Preamble sequence and
a MAC frame; transmit power of the Preamble sequence is
first power; transmit power of the MAC frame is second
power; and the first power is higher than the second power

302

If the data frame
received by the
device in the first
BSS includes the
Preamble sequence
but does not
include the MAC
frame, set a second
NAV value
according to a SIG
field in the
Preamble sequence

303

If the data frame
received by the
device in the first
BSS includes the
Preamble sequence
and the MAC frame,
set a first NAV
value according to a
Duration field in a
frame header of the
MAC frame when
the MAC frame can
be parsed

304

If the data frame
received by the
device in the first
BSS includes the
Preamble sequence
and the MAC frame,
set a first NAV value
according to a SIG
field in the Preamble
sequence when the
MAC frame cannot
be parsed

305

Determine whether a long range BSS exists
around the device of the first BSS

Y

306

Transmit data
according to the
NAV value

N

307

Send the data frame at
normal transmit power
of the device in the
first BSS

FIG. 8

FIG. 9

FIG. 10

602                                    601

Network
allocation vector          Receiving
module                        module

603                    604                    605

Determining          Transmission          Clear channel
module                 module               assessment
                                            module

FIG. 11

<u>70</u>

74                    73

Processor            Memory

75

71                    72

Transmitter          Receiver

FIG. 12

**EP 2 993 857 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1528691 A2
- US 2006221911 A1
- WO 2011099687 A1